# EUROPEAN PATENT APPLICATION

(11) **EP 4 806 681 A1**
(43) Date of publication of application: **16.09.2026**
(21) Application number: 25896804.9
(22) Date of filing: 13.08.2025
(51) Int. Cl.: B60H 1/00

(54) **PASSENGER COMPARTMENT TEMPERATURE CONTROL METHOD, AND SYSTEM AND VEHICLE**

(30) Priority: 28.11.2024 CN 202411725496
(71) Applicant: Chery Automobile Co., Ltd., Wuhu, Anhui 241006 (CN)
(72) Inventor: GUO, Hengtao, Wuhu, Anhui 241006 (CN); LIU, Zhengyu, Wuhu, Anhui 241006 (CN); ZHENG, Tao, Wuhu, Anhui 241006 (CN); LONG, Jinshi, Wuhu, Anhui 241006 (CN); CHENG, Jiansong, Wuhu, Anhui 241006 (CN); MA, Shenglong, Wuhu, Anhui 241006 (CN); CHAN, Qisong, Wuhu, Anhui 241006 (CN)
(74) Representative: Adamson Jones
(86) International application number: PCT/CN2025/114374
(87) International publication number: WO 2026/113508

(57) **Abstract**

A passenger compartment temperature control method, and a system and a vehicle. The method comprises: receiving a temperature distribution heat map collected by an infrared imaging apparatus, and receiving an occupant image captured by a camera (step 200), wherein the occupant image refers to an image including an occupant in a passenger compartment; acquiring an actual body surface temperature of the occupant in the passenger compartment (step 210); and on the basis of the temperature distribution heat map, the occupant image and the actual body surface temperature, controlling an air output volume and/or an air output temperature at an air outlet in a temperature control region (step 220), wherein the air output volume and/or the air output temperature are/is used for adjusting the actual body surface temperature of the occupant to a target body surface temperature.

## Description

This application claims priority to Chinese Patent Application No. 202411725496.9, filed on November 28, 2024 and entitled "METHOD AND SYSTEM FOR CONTROLLING TEMPERATURE IN PASSENGER CABIN, AND VEHICLE," the entire content of which is incorporated herein by reference.

### TECHNICAL FIELD

The present disclosure relates to the technical field of temperature control, and in particular, relates to a method and system for controlling temperature in a passenger cabin, and a vehicle.

### BACKGROUND

With the rapid development of the automobile industry and the more stringent requirements for vehicle comfort, vehicles have gradually evolved into intelligent private spaces integrated with entertainment. As an important device for environment regulation inside a vehicle, the demands for intelligence and personalization of vehicle air conditioners are ever growing.

In the related art, a temperature control system of a vehicle air conditioner mainly relies on a temperature sensor to detect the temperature inside the vehicle, and controls an air volume and an air temperature of the air conditioner according to a predetermined target temperature, such that the temperature inside the vehicle reaches the predetermined temperature.

However, the above temperature control method ignores individual thermal sensation differences of occupants and temperature differences at different positions within the passenger cabin, resulting in unsatisfactory temperature control effects and an inability to meet the personalized needs of the occupants.

### SUMMARY

To address the above technical problem or part of the above technical problem, the present disclosure provides a method for controlling temperature in a passenger cabin.

In one aspect, some embodiments of the present disclosure provide a method for controlling temperature in a passenger cabin, performed by a vehicle air conditioning controller. The method includes:
receiving a thermal distribution map captured by an infrared imaging device, and receiving an occupant image captured by a camera, wherein the occupant image refers to an image within the passenger cabin containing an occupant;
acquiring an actual body surface temperature of the occupant within the passenger cabin; and
controlling, based on the thermal distribution map, the occupant image, and the actual body surface temperature, at least one of an air volume or an air temperature of an air outlet within a temperature control zone, wherein the at least one of the air volume or the air temperature is configured to adjust the actual body surface temperature of the occupant to reach a target body surface temperature.

In some embodiments, acquiring the actual body surface temperature of the occupant within the passenger cabin includes:
synchronously transforming a temperature distribution in the thermal distribution map into the occupant image; and
extracting a target area where a face of the occupant is located in the occupant image, and using an average temperature value of the target area as the actual body surface temperature of the occupant.

In some embodiments, the method further includes:
extracting the target area, and comparing the target area with a pre-stored facial image to determine an identity of the occupant corresponding to the target area; and
reading the target body surface temperature based on the identity of the occupant.

In some embodiments, the method further includes:
determining an activity state of the occupant within the passenger cabin, the activity state being configured to indicate an activity condition of the occupant in the passenger cabin; and
in a case where the activity state indicates that the occupant is in a sleep state, setting the target body surface temperature as a second target body surface temperature for the sleep state; or
in a case where the activity state indicates that the occupant is in an active state, setting the target body surface temperature as a first target body surface temperature;
wherein the second target body surface temperature of the occupant is higher than or equal to the first target body surface temperature.

In some embodiments, the occupant image includes n image frames, the n image frames being consecutive in time, each image frame including a facial area of the occupant, and n being a positive integer greater than 1; and
the method further includes:
obtaining n facial positions by determining positions of the facial area within the n image frames;
determining a closure condition of eyes corresponding to the facial area within the n image frames, the closure condition being configured to indicate a closure state of the eyes of the occupant; and
in response to the n facial positions being identical and the closure state of the eyes indicating a closed-eye state, determining the activity state of the occupant as the sleep state; or
in response to the n facial positions being different and/or the closure state of the eyes indicating an open-eye state, determining the activity state of the occupant as the active state.

In some embodiments, the method further includes:
determining a first facial area of the occupant in an (i+1)^{th} image frame, and determining a second facial area of the occupant in an i^{th} image frame, where i is a positive integer greater than or equal to 1 and (i+1) is less than or equal to n;
determining a position change state of the occupant within the passenger cabin based on the first facial area and the second facial area;
in response to the position change state indicating that a position of the occupant has not changed, determining a first closure condition of the eyes of the occupant in the first facial area, and determining a second closure condition of the eyes of the occupant in the first facial area and the second facial area;
in response to both the first closure condition and the second closure condition indicating that the eyes of the occupant are in a closed-eye state, incrementing a count value of a counter by a predetermined value; in response to at least one of the first closure condition or the second closure condition indicating that the eyes of the occupant are in an open-eye state, resetting the count value of the counter to zero; or
in response to the position change state indicating that the position of the occupant has changed, resetting the count value of the counter to zero; and
in response to the count value of the counter reaching a target threshold, determining the activity state of the occupant as the sleep state.

In some embodiments, the method further includes:
determining a third distance from the facial area of the occupant to the air outlet based on the occupant image; and
adjusting the at least one of the air volume or the air temperature of the air outlet according to the third distance.

In some embodiments, determining the distance from the facial area of the occupant to the air outlet based on the occupant image includes:
determining a first position of a center of the air outlet in the occupant image;
determining a second position of the facial area in the occupant image; and
determining the third distance based on the first position and the second position.

In another aspect, some embodiments of the present disclosure provide an apparatus for controlling temperature in a passenger cabin. The apparatus includes:
a receiving module, configured to receive a thermal distribution map captured by an infrared imaging device, and receive an occupant image captured by a camera, wherein the occupant image refers to an image within the passenger cabin containing an occupant;
an acquiring module, configured to acquire an actual body surface temperature of the occupant within the passenger cabin; and
a control module, configured to control, based on the thermal distribution map, the occupant image, and the actual body surface temperature, at least one of an air volume or an air temperature of an air outlet within a temperature control zone, wherein the at least one of the air volume or the air temperature is configured to adjust the actual body surface temperature of the occupant to reach a target body surface temperature.

In another aspect, some embodiments of the present disclosure provide a computer device. The computer device includes a processor and a memory. The memory stores at least one program therein. The at least one program, when loaded and run by the processor, causes the computer device to perform the method for controlling temperature in a passenger cabin as described above.

In another aspect, some embodiments of the present disclosure provide a computer-readable storage medium. The computer-readable storage medium stores at least one program therein. The at least one program, when loaded and run by a processor, causes the computer device to perform the method for controlling temperature in a passenger cabin as described above.

In another aspect, some embodiments of the present disclosure provide a computer program product or computer program. The computer program product or computer program includes one or more computer instructions. The one or more computer instructions are stored on a computer-readable storage medium. The one or more computer instructions, when read from the computer-readable storage medium and executed by a processor, cause the processor to perform the method for controlling temperature in a passenger cabin as described above.

In another aspect, some embodiments of the present disclosure provide a system for controlling temperature in a passenger cabin. The system includes:
a vehicle seat, wherein a temperature control zone is arranged at the vehicle seat, the temperature control zone comprising an air outlet;
an infrared imaging device, disposed at a front of the vehicle, wherein the infrared imaging device is configured to capture a thermal distribution map within a passenger cabin of the vehicle;
a camera, disposed at the front of the vehicle, wherein the camera is configured to photograph an occupant within the passenger cabin to acquire an occupant image; and
a vehicle air conditioning controller, configured to adjust at least one of an air volume or an air temperature of the air outlet based on the thermal distribution map, the occupant image, and an actual body surface temperature of the occupant, such that the actual body surface temperature of the occupant reaches a target body surface temperature.

In another aspect, some embodiments of the present disclosure provide a vehicle, integrating a passenger cabin temperature control system.

The passenger cabin temperature control system includes:
a vehicle seat, wherein a temperature control zone is arranged at the vehicle seat, the temperature control zone comprising an air outlet;
an infrared imaging device, disposed at a front of the vehicle, wherein the infrared imaging device is configured to capture a thermal distribution map within a passenger cabin of the vehicle;
a camera, disposed at the front of the vehicle, wherein the camera is configured to photograph an occupant within the passenger cabin to acquire an occupant image; and
a vehicle air conditioning controller, configured to adjust at least one of an air volume or an air temperature of the air outlet based on the thermal distribution map, the occupant image, and an actual body surface temperature of the occupant, such that the actual body surface temperature of the occupant reaches a target body surface temperature.

In the embodiments of the present disclosure, an air volume and an air temperature of an air outlet within a corresponding temperature control zone are controlled based on an actual body surface temperature and a set target body surface temperature of an occupant, thereby achieving zonal control of the temperature within the passenger cabin and better satisfying the personalized needs of users.

### BRIEF DESCRIPTION OF DRAWINGS

For clearer descriptions of technical solutions according to the embodiments of the present disclosure, drawings that are to be referred to for description of the embodiments are briefly described hereinafter. Apparently, the drawings described hereinafter merely illustrate some embodiments of the present disclosure. Persons of ordinary skill in the art may also derive other drawings based on the drawings described herein without any creative effort.
FIG. 1 is a schematic structural diagram of a system for controlling temperature in a passenger cabin according to some exemplary embodiments of the present disclosure;
FIG. 2 is a flowchart of a method for controlling temperature in a passenger cabin according to some exemplary embodiments of the present disclosure;
FIG. 3 is a flowchart of a method for controlling temperature in a passenger cabin according to some exemplary embodiments of the present disclosure; and
FIG. 4 is a flowchart of a method for controlling temperature in a passenger cabin according to some exemplary embodiments of the present disclosure.

Specific embodiments of the present disclosure have been illustrated by the accompanying drawings, and detailed descriptions may be given hereinafter. These drawings and textual descriptions are not intended to limit the scope of the concept of the present disclosure, but to illustrate the concept of the present disclosure for a person skilled in the art by reference to the specific embodiments.

### DETAILED DESCRIPTION

The technical solutions according to some embodiments of the present disclosure are described in detail clearly and completely hereinafter with reference to the accompanying drawings for the embodiments of the present disclosure. Apparently, the described embodiments are only a portion of the embodiments of the present disclosure, but not all the embodiments of the present disclosure. Based on the embodiments of the present disclosure, all other embodiments derived by persons of ordinary skill in the art without any creative efforts shall fall within the protection scope of the present disclosure.

Unless otherwise defined, all technical terms used in the embodiments of the present disclosure have the same meanings as commonly understood by those of ordinary skill in the art.

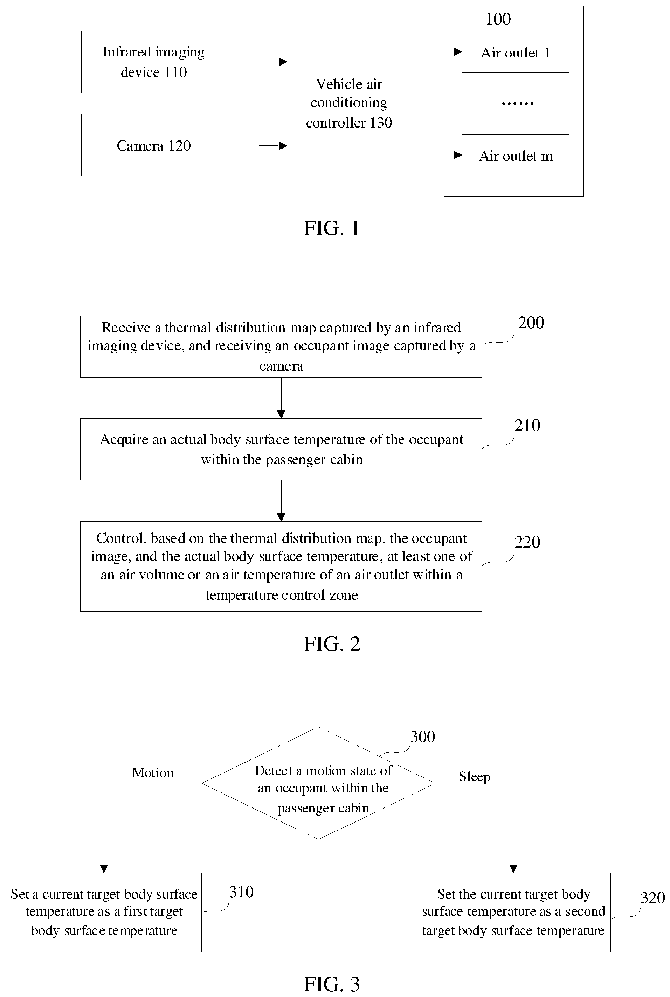

FIG. 1 is a schematic structural diagram of a system for controlling temperature in a passenger according to some exemplary embodiments of the present disclosure. For convenience of description, only parts related to the embodiments of the present disclosure are illustrated. The system includes a vehicle seat, an infrared imaging device 110, a camera 120, and a vehicle air conditioning controller 130.

A temperature control zone is arranged at the vehicle seat, wherein the temperature control zone includes an air outlet.

Optionally, the vehicle includes a plurality of vehicle seats, each vehicle seat corresponds to one temperature control zone, and each temperature control zone is provided with a corresponding air outlet; that is, the vehicle includes a plurality of air outlets 100.

The infrared imaging device 110 is disposed at a front of the vehicle and configured to capture a thermal distribution map within the passenger cabin of the vehicle. Exemplarily, the infrared imaging device is disposed at a vehicle glass at the front of the vehicle or disposed above a central rearview mirror of the vehicle to ensure coverage of the entire in-vehicle space of the vehicle.

The camera 120 is disposed at the front of the vehicle and configured to photograph an occupant within the passenger cabin of the vehicle to acquire an occupant image.

The vehicle air conditioning controller 130 is configured to adjust at least one of an air volume or an air temperature of the air outlet based on the thermal distribution map, the occupant image, and an actual body surface temperature of the occupant, such that the actual body surface temperature of the occupant reaches a target body surface temperature.

Optionally, the infrared imaging device 110 and the camera 120 are respectively in communication with the vehicle air conditioning controller 130. The communication connection may be implemented as a wireless communication connection or a wired communication connection, which is not limited in the present disclosure.

FIG. 2 is a flowchart of a method for controlling temperature in a passenger cabin according to some exemplary embodiments of the present disclosure. The method is performed by the vehicle air conditioning controller illustrated in FIG. 1. The method specifically includes the following steps 200 to 220.

In step 200, a thermal distribution map captured by an infrared imaging device is received, and an occupant image captured by a camera is received.

Optionally, the infrared imaging device and the camera are components disposed within the vehicle. The infrared imaging device and the camera are disposed at the front of the vehicle, for example, at a rearview mirror inside the vehicle. In some optional embodiments, the installation positions of the infrared imaging device and the camera may be the same or different, which is not limited in the present disclosure.

The infrared imaging device is configured to capture an infrared thermal map within the passenger cabin to acquire the thermal distribution map.

Optionally, the infrared imaging device is a device that converts infrared radiation energy emitted from a surface of the passenger cabin into a visualized thermal distribution map using infrared thermal imaging technology. In the thermal distribution map, temperature differences at various points on the surface of the passenger cabin are intuitively represented by different colors or gray levels, thereby reflecting the temperature distribution.

Optionally, the infrared imaging device takes itself as a starting point, acquires infrared radiation lines emitted from each position within the passenger cabin, and focuses the infrared radiation lines onto a detector within the infrared imaging device. The detector converts the infrared radiation lines into electrical signals, which are then converted into a temperature matrix to map and obtain the thermal distribution map.

The camera is configured to capture images within the passenger cabin. In the embodiments of the present disclosure, the camera photographs the occupant within the passenger cabin to acquire the occupant image; that is, the occupant image captured by the camera contains the occupant.

In step 210, an actual body surface temperature of the occupant within the passenger cabin is acquired.

Optionally, the actual body surface temperature refers to a real physical temperature sensed by a surface of human skin of the occupant.

In the embodiments of the present disclosure, a temperature distribution in the thermal distribution map is synchronously transformed into the occupant image.

A target area where a face of the occupant is located is extracted from the occupant image, and an average temperature value of the target area is used as the actual body surface temperature of the occupant.

Based on the operating principle of the infrared imaging device mentioned above, a passenger cabin area and an occupant area captured in the occupant image are determined. In combination with the temperature matrix determined by the infrared imaging device, a first temperature matrix corresponding to the passenger cabin area and a second temperature matrix corresponding to the occupant area are determined.

The first temperature matrix is synchronously transformed into the occupant image to acquire an occupant area thermal map.

The second temperature matrix is synchronously transformed into a passenger cabin image to acquire a passenger cabin area thermal map.

The occupant image and the passenger cabin image are spliced to form the occupant image.

The occupant area thermal map and the passenger cabin area thermal map are fused to acquire an occupant thermal distribution map corresponding to the occupant image.

In the embodiments of the present disclosure, a plurality of temperature values included in the first temperature matrix are acquired, wherein the plurality of temperature values are used to characterize the body surface temperature of the occupant.

The actual body surface temperature of the occupant is determined based on the plurality of temperature values.

Optionally, an average value of the plurality of temperature values is determined as the actual body surface temperature.

Optionally, the target area where the face of the occupant is located is extracted from the occupant image, a target temperature matrix corresponding to the target area is determined from the first temperature matrix, and an average value of a plurality of temperature values in the target temperature matrix is determined as the actual body surface temperature.

In some embodiments, an eye-intelligent recognition model is used to extract (recognize) the target area where the face of the occupant is located from the occupant image.

Exemplarily, the occupant image is input into the eye intelligent recognition model, facial features in the occupant image are extracted through the eye intelligent recognition model, and in response to the facial features matching target eye features, an area where the facial features are located is determined as the target area. The eye intelligent recognition model may be implemented as any type of artificial intelligence model, which is not limited in the present disclosure.

In the above embodiments, by the synchronous transformation of the thermal distribution map and the occupant image, misalignment between temperature and pixels in the image caused by visual differences, lens distortion, or installation position deviations of components (the infrared imaging device and/or the camera) is eliminated. This ensures that the subsequent determination of the actual body surface temperature is applied to the area where the actual person is located, thereby improving the accuracy of determining the actual body surface temperature of the occupant to an extent.

In step 220, at least one of an air volume or an air temperature of an air outlet within a temperature control zone is controlled based on the thermal distribution map, the occupant image, and the actual body surface temperature.

Exemplarily, the air temperature refers to the temperature of air delivered into the passenger cabin by the temperature control zone, and the air volume refers to the volume of air delivered into the passenger cabin by the temperature control zone.

The at least one of the air volume or the air temperature is used to adjust the actual body surface temperature of the occupant to reach a target body surface temperature.

In the embodiments of the present disclosure, the target body surface temperature refers to a temperature desired by the occupant. The target body surface temperature may be predefined by the occupant or may be a real-time temperature determined based on an ambient temperature and the thermal distribution map, which is not limited in the present disclosure.

In some embodiments, the target area where the eyes of the occupant are located is extracted from the occupant image, and the target area is compared with a pre-stored facial image to determine an identity of the occupant corresponding to the target area.

The target body surface temperature is read according to the identity of the occupant.

Exemplarily, an occupant identity-temperature correspondence table is stored in the vehicle. The correspondence table records correspondence relationships among the occupant, the facial image of the occupant, and a desired in-vehicle temperature (having the same meaning as the target body surface temperature) of the occupant.

The target area where the eyes of the occupant are located in the occupant image is determined using the eye intelligent recognition model.

Whether the target area matches a facial image recorded in the correspondence table is determined. In response to the target area matching a target facial image in the correspondence table, the identity of the occupant and the target body surface temperature matching the target facial image are determined based on the correspondence table.

In the above embodiments, the extracted target area is compared with a locally pre-stored facial template, and the target body surface temperature corresponding to the occupant is retrieved using a unique identity index. This allows the method for controlling temperature in a passenger cabin according to the embodiments of the present disclosure to accurately adapt to independent individuals, thereby achieving consideration of individual differences and improving the flexibility of temperature control adjustment.

In some embodiments, an ambient temperature of an environment where the vehicle is located is acquired, wherein the ambient temperature is captured by a temperature sensor disposed outside the vehicle.

The target body surface temperature required by the occupant in the occupant image is determined based on the ambient temperature and the actual body surface temperature.

Exemplarily, a temperature matrix corresponding to the thermal distribution map is obtained, and a maximum temperature value is determined from the temperature matrix.

In response to the maximum temperature value being equal to or less than the actual body surface temperature, a first temperature value is determined as the target body surface temperature, wherein this process is used to cool down the occupant.

In response to the maximum temperature value being less than the actual body surface temperature, this process is used to warm up the occupant.

In some embodiments, an activity state of the occupant within the passenger cabin is determined.

The activity state is used to indicate an activity condition of the occupant in the passenger cabin.

In a case where the activity state indicates that the occupant is in a sleep state, the target body surface temperature is set as a second target body surface temperature for the sleep state; or in a case where the activity state indicates that the occupant is in an activity state, the target body surface temperature is set as a first target body surface temperature; wherein the second target body surface temperature of the occupant is higher than or equal to the first target body surface temperature.

That is, the state of the occupant is classified into activity states under sleep and non-sleep (active). Combined with the two different activity states, the target body surface temperature desired by the occupant is classified into the first target body surface temperature for an active state and the second target body surface temperature for the sleep state. Generally, the second target body surface temperature of the same occupant is higher than the first target body surface temperature.

In some embodiments, both the first target body surface temperature and the second target body surface temperature are personalized parameters predefined by the occupant; or the second target body surface temperature is defined by adjusting a specified number of temperature degrees upward based on the first target body surface temperature; or the first target body surface temperature is defined by adjusting a specified number of temperature degrees downward based on the second target body surface temperature.

Optionally, during adjustment of the air conditioning temperature by the occupant in the passenger cabin, facial information of the occupant is acquired. The vehicle air conditioning controller associatively stores the facial information of the occupant with the adjusted air conditioning temperature, for example, in the correspondence table. When the occupant enters the passenger cabin the next time, the camera captures an occupant image of the occupant and sends the occupant image to the vehicle air conditioning controller. The vehicle air conditioning controller analyzes whether the occupant image matches the correspondence table. In a case where the facial information corresponding to the occupant image matches the correspondence table, a target temperature corresponding to the facial information is read from the correspondence table, and the at least one of the air volume or the air temperature of the air outlet is controlled to reach the target temperature.

Optionally, a communication connection is established between the vehicle and a smart terminal. The occupant enters facial information and inputs a desired target air conditioning temperature into the smart terminal, and the smart terminal stores the correspondence between the facial information and the target air conditioning temperature. In a case where the smart terminal determines that the occupant is in a vehicle use scenario, the smart terminal sends the correspondence between the facial information and the target air conditioning temperature to the vehicle air conditioning controller of the vehicle. The vehicle air conditioning controller controls the at least one of the air volume or the air temperature of the air outlet to reach the target air conditioning temperature.

The vehicle use scenario is used to represent a scenario where the occupant is driving the vehicle. Methods for determining that the occupant is in the vehicle use scenario include, but are not limited to, at least one of the following:
First: A usage mode of an application in the smart terminal is acquired. The application provides a plurality of usage modes. In different usage modes, usage habits, interface appearance, and control methods of the application are different. The plurality of usage modes include an in-vehicle mode. In a case where the usage mode of the application indicates the in-vehicle mode, it is determined that the occupant is in the vehicle use scenario. For example, the smart terminal runs a music application, and the music application is currently in the in-vehicle mode. In the in-vehicle mode, the audio source of the music application is played via the vehicle. In a case where the smart terminal determines that the music application is in the in-vehicle mode, an air conditioning configuration interface is displayed. The air conditioning configuration interface is used to prompt the occupant to enter facial information and input a target air conditioning temperature. The air conditioning configuration interface includes a facial input control and a temperature input control. In response to receiving a touch operation on the facial input control, a camera of the smart terminal is invoked to capture the facial information of the occupant. In response to receiving a touch operation on the temperature input control, the target air conditioning information input by the occupant is acquired.

Second: A speed sensor is provided in the smart terminal. The smart terminal acquires speed information captured by the speed sensor. In response to the speed information matching a predetermined speed interval (e.g., 40 to 100 km/h), it is determined that the occupant is in the vehicle use scenario. Upon determination that the occupant is in the vehicle use scenario, the air conditioning configuration interface is displayed to complete the entry of the facial information and the target air conditioning temperature.

Exemplarily, FIG. 3 illustrates a flowchart of a method for controlling temperature in a passenger cabin according to another exemplary embodiment. The flowchart includes detecting an activity state of an occupant within the passenger cabin (step 300). In response to the activity state indicating active state, a current target body surface temperature is set as a first target body surface temperature (step 310); or in response to the activity state indicating sleep state, the current target body surface temperature is set as a second target body surface temperature (step 320). Steps 300 to 320 are performed by the vehicle. For specific details, reference may be made to the above content, which is not described herein any further.

In the above embodiments, by determining the activity state of the occupant within the passenger cabin in real-time and invoking the target body surface temperature adapted to the activity state, in one aspect, the natural decline in body temperature caused by a decrease in metabolic rate during sleep is compensated for, thereby avoiding overcooling stimulation; and in another aspect, the risk of overheating due to metabolic heat production during physical activity is prevented. This achieves precise matching between temperature and human metabolic needs, and thus improves the comfort of the occupant during the process of riding or driving to an extent.

In some embodiments, a specific process for determining the activity state of the occupant is as follows.

Optionally, the occupant image includes n image frames, wherein the n image frames are consecutive in time, each image frame includes a facial area of the occupant, and n is a positive integer greater than 1.

Positions of the facial area within the n image frames are determined to obtain n facial positions.

Optionally, the position here refers to a relative position of the facial area with respect to a center of mass of the vehicle.

Exemplarily, description is given by using one image frame among the n image frames as an example: the facial area where the occupant is located in the image frame is determined, and in-vehicle components appearing in the image frame are determined, wherein the in-vehicle components refer to components within the passenger cabin of the vehicle. The in-vehicle components include a seatbelt, a seat backrest, window glass, and the like.

A first relative position between the facial area and the in-vehicle components in the image frame is determined.

Vehicle component information is acquired, wherein the vehicle component information records relative position relationships among various components constituting the vehicle.

Based on the vehicle component information and the first relative position, a position of the occupant relative to the center of mass of the vehicle is determined, which is the facial position as described above.

A closure condition of the eyes corresponding to the facial area within the n image frames is determined, wherein the closure condition is used to indicate a closure state of the eyes of the occupant. In response to the n facial positions being identical and the closure state of the eyes indicating a closed-eye state, the activity state of the occupant is determined as the sleep state. In response to the n facial positions being different and/or the closure state of the eyes indicating an open-eye state, the activity state of the occupant is determined as the active state.

In the above embodiments, the activity state of the occupant is jointly determined using the facial positions and the closure states of the eyes across n consecutive frames. This improves the determination accuracy of the activity state to an extent and provides reliable data support for subsequent temperature control strategies.

In some other optional embodiments, a first facial area of the occupant in an (i+1)^{th} image frame is determined, and a second facial area of the occupant in an i^{th} image frame is determined.

A position change state of the occupant within the passenger cabin is determined based on the first facial area and the second facial area.

Optionally, a first in-vehicle component included in the (i+1)^{th} image frame is determined, and a second in-vehicle component included in the i^{th} image frame is determined, where i is a positive integer greater than or equal to 1 and (i+1) is less than or equal to n.

A target in-vehicle component that is identical between the first in-vehicle component and the second in-vehicle component is determined. A first distance between the target in-vehicle component and the facial area in the (i+1)^{th} image frame is determined, and a second distance between the target in-vehicle component and the facial area in the i^{th} image frame is determined.

The position change state of the occupant within the passenger cabin is determined based on a magnitude relationship between the first distance and the second distance.

The position change state is used to indicate whether the position of the occupant within the passenger cabin has changed.

In response to the first distance being equal to the second distance, it is determined that the position of the occupant within the passenger cabin has not changed.

In response to the first distance not being equal to the second distance, it is determined that the position of the occupant within the passenger cabin has changed.

Optionally, in response to the position change state indicating that the position of the occupant has not changed, a first closure condition of the eyes of the occupant in the first facial area is determined, and a second closure condition of the eyes of the occupant in the second facial area is determined.

In response to both the first closure condition and the second closure condition indicating that the eyes of the occupant are in a closed-eye state, a count value of a counter is incremented by a predetermined value, wherein the preset value is implemented as 1. In response to the position change state indicating that the position of the occupant has changed, the count value of the counter is reset to zero.

In response to at least one of the first closure condition or the second closure condition indicating that the eyes of the occupant are in an open-eye state, the count value of the counter is reset to zero.

In response to the count value of the counter reaching a target threshold, the activity state of the occupant is determined as the sleep state, where the target threshold is a pre-stored value.

In the above embodiments, a comparison mechanism between the facial areas of the i^{th} image frame and the (i+1)^{th} image frame is adopted. The count value is incremented only when the occupant's position has not changed and eyes are closed in two consecutive frames. Once the position changes or an open-eye state appears in any image frame, the counter is immediately reset to zero. This avoids misjudgment of the sleep state caused by blinking or light interference when recognizing a single image frame, thereby improving the accuracy of sleep state determination and reducing the misjudgment rate to a certain extent.

Exemplarily, the vehicle air conditioning controller detects the activity state of the occupant based on the occupant image captured by the camera. In a case where the posture of an occupant in an image does not change within several consecutive frames of occupant images and the eyes of the occupant are in a closed-eye state, the occupant is determined to be in a sleep state; or otherwise, the occupant is determined to be in an active state. The determination process of the sleep state includes the following steps S1 to S4:
S1, comparing a currently captured occupant image with an occupant image of a previous frame to detect whether a position of the occupant in the image has changed;
S2, for an occupant whose position has not changed, performing step S3; or for an occupant whose posture has changed, resetting a count value of a counter to zero and performing step S1;
S3, detecting whether the occupant is in a closed-eye state; in a case where the occupant is in the closed-eye state, incrementing the count value of the counter by 1 and then performing step S4; or in a case where the occupant is not in the closed-eye state, resetting the count value of the counter to zero and performing step S1; and
S4, in a case where the count value of the counter reaches a set count threshold N (wherein N is a positive integer), determining that the corresponding occupant is in the sleep state.

The vehicle air conditioning controller periodically performs detection on the activity state of the occupant within the passenger cabin. After a current detection moment for the activity state of the occupant is reached, in a case where a position of the occupant remains substantially unchanged in N+1 consecutive occupant image frames within a subsequent detection duration, the corresponding occupant is determined to be in the sleep state.

In determining a current target body surface temperature of the corresponding occupant based on the activity state of each occupant, the target body surface temperature adaptively changes with the change in the activity state of the occupant. For example, in a case where a child in a rear seat has been playing for a period and enters a sleep state, the air volume and the air temperature of the air outlet in the corresponding temperature control zone may adaptively change, such that the actual body surface temperature of the child matches the target body surface temperature corresponding to the two activity states, thereby greatly enhancing the user's thermal sensation.

In the embodiments of the present disclosure, a transformation posture T between the thermal distribution map captured by the infrared imaging device and the occupant image captured by the camera is pre-completed. Upon receiving the thermal distribution map captured by the infrared imaging device, the vehicle air conditioning controller transforms the temperature distribution in the thermal map into the occupant image based on the transformation posture T. A target area of the face of each occupant is extracted in the occupant image, and an average temperature of the target area is used as the body surface temperature of the corresponding occupant. In the embodiments of the present disclosure, a rectangular area is established with a facial breathing point (nose) of each occupant as a center, and the rectangular area is the target area. The target area has a length of 300 mm and a width of 200 mm.

In the embodiments of the present disclosure, upon receiving the occupant image, the vehicle air conditioning controller extracts a facial image of each occupant in the occupant image, compares the facial image with stored facial images to determine an identity of the occupant corresponding to the facial image, and reads target parameters set by the corresponding occupant, including the target body surface temperature.

A personalized parameter table is stored in the vehicle air conditioning controller. The table records identities of occupants, link addresses of facial images corresponding to the identities, and personalized parameters set by the occupants corresponding to the identities, including the target body surface temperature. The facial images of the occupants are stored in a storage unit of the vehicle. The storage unit may be integrated in the vehicle air conditioning controller or may be set independently from the vehicle air conditioning controller, which is not limited in the present disclosure.

In the embodiments of the present disclosure, during capturing of the thermal distribution map and the occupant image of the occupant in the passenger cabin using the infrared imaging device and the camera, in a case where the face of the occupant is in a deflected state, a complete facial image may not be extracted from the occupant image, or only a partial facial image is extractable. This means that a complete target area may not be obtainable, or identity determination of the occupant may not be achievable at this moment. Consequently, the actual body surface temperature and the target body surface temperature of the occupant may not be determined at the current moment. Since the sampling frequencies of the infrared imaging device and the camera are high, and the time difference between the current moment and a previous moment is very small, the actual body surface temperature and the target body surface temperature of the occupant at the previous moment are used as the actual body surface temperature and the target body surface temperature of the occupant at the current moment.

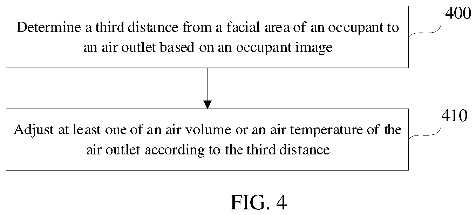

FIG. 4 is a flowchart of a method for controlling temperature in a passenger cabin according to some exemplary embodiments of the present disclosure. The embodiments further include the following steps based on the technical solutions involved in the above embodiments.

In step 400, a third distance from a facial area of an occupant to an air outlet is determined based on an occupant image.

Optionally, a first position of a center of the air outlet in the occupant image is determined, and a second position of the facial area in the occupant image is determined. The third distance is determined based on the first position and the second position.

Exemplarily, in-vehicle components in the occupant image are recognized.

A distance between an in-vehicle component and the center of the air outlet in the occupant image is determined as the first position.

A distance between the in-vehicle component and the facial area in the occupant image is determined as the second position.

In some optional embodiments, the distance determination process may be performed by an artificial intelligence model. The artificial intelligence model is trained to predict an actual distance between two points in an image. The specific training process is consistent with training methods in conventional application scenarios, which is not described herein any further.

The third distance is determined based on the first position and the second position.

Exemplarily, vehicle component information of the vehicle is acquired, wherein the vehicle component information records relative position relationships among various components constituting the vehicle.

According to the vehicle component information, a fourth distance between the in-vehicle component and a center of mass of the vehicle is determined.

The third distance is determined based on the first position, the second position, and the fourth distance. Exemplarily, a first absolute value of a difference between the first position and the fourth distance is determined, and a second absolute value of a difference between the second position and the fourth distance is determined; and an absolute value of a difference between the first absolute value and the second absolute value is determined as the third distance.

In step 410, at least one of an air volume or an air temperature of the air outlet is adjusted according to the third distance.

Optionally, based on the occupant image captured by the camera, a distance from the face of the occupant to the air outlet within the corresponding temperature control zone is detected, and the air volume and the air temperature of the air outlet in the temperature control zone are adjusted based on the distance.

In the embodiments of the present disclosure, a mapping table of air volumes and air temperatures under different temperature differences and different distances is stored in the vehicle air conditioning controller. The mapping table is obtained through actual vehicle calibration. Different temperature differences and distances are combined into a series of calibration points. Under operating conditions corresponding to each calibration point, air temperature calibration under different air volumes is completed, thereby forming the mapping table.

Optionally, in a case where the distance from the occupant to the air outlet is less than a target distance threshold, the air volume of the air outlet is decreased to enhance the user's riding experience and avoid a large amount of cold or hot air blowing directly onto the user's face, which causes discomfort. Furthermore, the temperature difference is a difference between the actual body surface temperature of the occupant and a current target body surface temperature. In a case where the distance from the occupant to the air outlet is greater than the target distance threshold, the air volume of the air outlet is increased.

In some embodiments, the vehicle includes a plurality of vehicle seats, each vehicle seat corresponds to one temperature control zone, and installation positions of the temperature control zones are different for different vehicle seats. For example, the temperature control zone for a driver seat is disposed near a steering wheel, and the temperature control zone for a rear seat is disposed in a door area.

Upon reception of the occupant image, analysis and extraction are performed on the occupant image to determine a target seat position where the occupant is located. The target seat position includes at least one of a driver seat position, a front passenger seat position, a rear left seat position, a rear middle seat position, or a rear right seat position.

A target temperature control zone matching the target seat position is determined, and the air volume and/or the air temperature of the air outlet of the target temperature control zone are controlled such that the actual body surface temperature of the occupant reaches the target body surface temperature.

Optionally, a target duration required for the actual body surface temperature of the occupant to reach the target body surface temperature is controlled by adjusting the air volume and/or the air temperature of the air outlet of the temperature control zone. Different temperature control zones correspond to different target durations.

In a case where a geometric center of the temperature control zone and a facial center of the occupant are on the same plane (including a horizontal plane parallel to the ground and a plane perpendicular to the ground), the target duration is increased to delay the time required for the actual body surface temperature of the occupant to reach the target body surface temperature.

In a case where the geometric center of the temperature control zone and the facial center of the occupant are not on the same plane, the target duration is decreased to accelerate the time required for the actual body surface temperature of the occupant to reach the target body surface temperature.

In some embodiments, the target seat position of the occupant is determined, and the temperature control zone corresponding to the target seat position is determined. The facial center of the occupant is determined from the occupant image. A relative position of the facial center with respect to the center of mass of the vehicle is determined (reference may be made to the above content for the determination process of the relative position). Then, in combination with the temperature control zone corresponding to the target seat position, a distance between the facial center and a center of the temperature control zone is determined. Subsequently, the air volume and/or the air temperature of the air outlet are adjusted according to this distance.

Some embodiments of the present disclosure further provide an apparatus for controlling temperature in a passenger cabin. The apparatus includes:
a receiving module, configured to receive a thermal distribution map captured by an infrared imaging device, and receive an occupant image captured by a camera, wherein the occupant image refers to an image within the passenger cabin containing an occupant;
an acquiring module, configured to acquire acquiring an actual body surface temperature of the occupant within the passenger cabin; and
a control module, configured to control, based on the thermal distribution map, the occupant image, and the actual body surface temperature, at least one of an air volume or an air temperature of an air outlet within a temperature control zone, wherein the at least one of the air volume or the air temperature is used to adjust the actual body surface temperature of the occupant to reach a target body surface temperature.

In the embodiments of the present disclosure, an air volume and an air temperature of an air outlet within a corresponding temperature control zone are controlled based on an actual body surface temperature and a set target body surface temperature of an occupant, thereby achieving zonal control of the temperature within the passenger cabin and better satisfying the personalized needs of users.

In the embodiments of the present disclosure, the method for controlling temperature in a passenger cabin is performed by a computer device. That is, the apparatus for controlling temperature in a passenger cabin is implemented as the computer device. Optionally, the computer device is implemented as a mobile device, such as a mobile intelligent terminal like an in-vehicle terminal. Generally, the computer device includes a processor and a memory.

The processor may be practiced based on a hardware form of at least one of a digital signal processor (DSP), a field-programmable gate array (FPGA), and a programmable logic array (PLA).

The memory may include one or a plurality of computer-readable storage media, wherein the computer-readable storage medium may be non-transitory. The memory may include a high-speed random access memory, and a non-volatile memory, for example, one or a plurality of magnetic disk storage devices or flash storage devices. In some embodiments, the non-transitory computer-readable storage medium in the memory may be configured to store at least one instruction, wherein the at least one instruction is executed by the processor to perform the method for controlling temperature in a passenger cabin according to the method embodiments of the present disclosure.

Some embodiments of the present disclosure further provide a computer-readable storage medium. The computer-readable storage medium stores at least one instruction, at least one program, a code set, or an instruction set; wherein the at least one instruction, the at least one program, the code set, or the instruction set is executed and loaded by a processor to perform the method for controlling temperature in a passenger cabin according to the above method embodiments.

Some embodiments of the present disclosure further provide a computer program product or a computer program. The computer program product or computer program includes one or more computer instructions. The one or more computer instructions are stored on a computer-readable storage medium. A processor of a computer device reads the one or more computer instructions from the computer-readable storage medium and executes the computer instructions, such that the computer device performs the method for controlling temperature in a passenger cabin according to the above method embodiments.

Persons of ordinary skill in the art should understand that all or part of steps of the preceding methods may be implemented by hardware or hardware following instructions of programs. The programs may be stored in a non-transitory computer-readable storage medium, and may be executed by at least one processor. The storage medium may be a read-only memory, a magnetic disk, or a compact disc-read-only memory. Described above are merely exemplary embodiments of the present disclosure, but are not intended to limit the present disclosure. Any modification, equivalent replacement, or improvement made without departing from the spirit and principle of the present disclosure should fall within the protection scope of the present disclosure.

Some embodiments of the present disclosure further provide a vehicle, wherein the vehicle integrates the passenger cabin temperature control system. The passenger cabin temperature control system controls, in real time, an air volume and an air temperature of an air outlet within each temperature control zone in the passenger cabin based on personalized parameters set by an occupant, such that an actual body surface temperature of the occupant within the temperature control zone reaches a target body surface temperature in the current state.

Other embodiments of the present disclosure will be apparent to those skilled in the art from consideration of the specification and practice disclosed herein. The present disclosure is intended to cover any variations, uses, or adaptations of the present disclosure following the general principles thereof and including such departures from the present disclosure as coming within common knowledge or customary technical means in the art. The specification and examples are considered exemplary only.

It may be appreciated that the present disclosure is not limited to the exact construction that has been described above and illustrated in the accompanying drawings, and that various modifications and changes may be made without departing from the scope thereof.

## Claims

1. A method for controlling temperature in a passenger cabin, performed by a vehicle air conditioning controller, the method comprising:
receiving a thermal distribution map captured by an infrared imaging device, and receiving an occupant image captured by a camera, wherein the occupant image refers to an image within the passenger cabin containing an occupant;
acquiring an actual body surface temperature of the occupant within the passenger cabin; and
controlling, based on the thermal distribution map, the occupant image, and the actual body surface temperature, at least one of an air volume or an air temperature of an air outlet within a temperature control zone, wherein the at least one of the air volume or the air temperature is configured to adjust the actual body surface temperature of the occupant to reach a target body surface temperature.

2. The method according to claim 1, wherein acquiring the actual body surface temperature of the occupant within the passenger cabin comprises:
synchronously transforming a temperature distribution in the thermal distribution map into the occupant image; and
extracting a target area where a face of the occupant is located in the occupant image, and using an average temperature value of the target area as the actual body surface temperature of the occupant.

3. The method according to claim 1 or 2, further comprising:
extracting the target area from the occupant image, and comparing the target area with a pre-stored facial image to determine an identity of the occupant corresponding to the target area; and
reading the target body surface temperature based on the identity of the occupant.

4. The method according to any one of claims 1 to 3, further comprising:
determining an activity state of the occupant within the passenger cabin, the activity state being configured to indicate an activity condition of the occupant in the passenger cabin; and
in a case where the activity state indicates that the occupant is in a sleep state, setting the target body surface temperature as a second target body surface temperature for the sleep state; or
in a case where the activity state indicates that the occupant is in an active state, setting the target body surface temperature as a first target body surface temperature;
wherein the second target body surface temperature of the occupant is higher than or equal to the first target body surface temperature.

5. The method according to any one of claims 1 to 4, wherein the occupant image comprises n image frames, the n image frames being consecutive in time, each image frame including a facial area of the occupant, and n being a positive integer greater than 1; and
the method further comprises:
obtaining n facial positions by determining positions of the facial area within the n image frames;
determining a closure condition of eyes corresponding to the facial area within the n image frames, the closure condition being configured to indicate a closure state of eyes of the occupant; and
in response to the n facial positions being identical and the closure state of the eyes indicating a closed-eye state, determining the activity state of the occupant as the sleep state; or
in response to the n facial positions being different and/or the closure state of the eyes indicating an open-eye state, determining the activity state of the occupant as the active state.

6. The method according to any one of claims 1 to 5, further comprising:
determining a first facial area of the occupant in an (i+1)^{th} image frame, and determining a second facial area of the occupant in an i^{th} image frame, where i is a positive integer greater than or equal to 1 and (i+1) is less than or equal to n;
determining a position change state of the occupant within the passenger cabin based on the first facial area and the second facial area;
in response to the position change state indicating that a position of the occupant has not changed, determining a first closure condition of eyes of the occupant in the first facial area, and determining a second closure condition of the eyes of the occupant in the first facial area and the second facial area;
in response to both the first closure condition and the second closure condition indicating that the eyes of the occupant are in a closed-eye state, incrementing a count value of a counter by a predetermined value; in response to at least one of the first closure condition or the second closure condition indicating that the eyes of the occupant are in an open-eye state, resetting the count value of the counter to zero; or
in response to the position change state indicating that the position of the occupant has changed, resetting the count value of the counter to zero; and
in response to the count value of the counter reaching a target threshold, determining the activity state of the occupant as a sleep state.

7. The method according to any one of claims 1 to 6, further comprising:
determining a third distance from a facial area of the occupant to the air outlet based on the occupant image; and
adjusting the at least one of the air volume or the air temperature of the air outlet according to the third distance.

8. The method according to any one of claims 1 to 7, wherein determining the distance from the facial area of the occupant to the air outlet based on the occupant image comprises:
determining a first position of a center of the air outlet in the occupant image;
determining a second position of the facial area in the occupant image; and
determining the third distance based on the first position and the second position.

9. A system for controlling temperature in a passenger cabin, integrated in a vehicle, the system comprising:
a vehicle seat, wherein a temperature control zone is arranged at the vehicle seat, the temperature control zone comprising an air outlet;
an infrared imaging device, disposed at a front of the vehicle, wherein the infrared imaging device is configured to capture a thermal distribution map within a passenger cabin of the vehicle;
a camera, disposed at the front of the vehicle, wherein the camera is configured to photograph an occupant within the passenger cabin to acquire an occupant image; and
a vehicle air conditioning controller, configured to adjust at least one of an air volume or an air temperature of the air outlet based on the thermal distribution map, the occupant image, and an actual body surface temperature of the occupant, such that the actual body surface temperature of the occupant reaches a target body surface temperature.

10. A vehicle, integrating a passenger cabin temperature control system; wherein
the passenger cabin temperature control system comprises:
a vehicle seat, wherein a temperature control zone is arranged at the vehicle seat, the temperature control zone comprising an air outlet;
an infrared imaging device, disposed at a front of the vehicle, wherein the infrared imaging device is configured to capture a thermal distribution map within a passenger cabin of the vehicle;
a camera, disposed at the front of the vehicle, wherein the camera is configured to photograph an occupant within the passenger cabin to acquire an occupant image; and
a vehicle air conditioning controller, configured to adjust at least one of an air volume or an air temperature of the air outlet based on the thermal distribution map, the occupant image, and an actual body surface temperature of the occupant, such that the actual body surface temperature of the occupant reaches a target body surface temperature.
